# EUROPÄISCHE PATENTSCHRIFT

(11) **EP 3 070 599 B1**
(45) Veröffentlichungstag und Bekanntmachung des Hinweises auf die Patenterteilung: **19.09.2018**
(21) Anmeldenummer: 15159238.3
(22) Anmeldetag: 16.03.2015
(51) Int. Cl.: G06F 9/4401, G06F 21/57, G06F 9/455

(54) **Verfahren und Virtualisierungssteuerung zum Starten eines Betriebssystems auf einer Computer-Hardware mit einer EFI- oder eine UEFI-Firmware**
Method and virtualisation control for starting an operting system on a computer hardware with a EFI or UEFI firmware
Méthode et le contrôle de la virtualisation pour démarrer un système d'exploitation sur un ordinateur avec un firmware UEFI ou EFI

(43) Veröffentlichungstag der Anmeldung: 21.09.2016
(73) Patentinhaber: Siemens Aktiengesellschaft, 80333 München (DE)
(72) Erfinder: Bernad, Kalman Hunor, 90766 Fürth (DE); Niesser, Otto, 90584 Allersberg (DE)

(56) Entgegenhaltungen:
- US-A1- 2014 258 700

## Beschreibung

Die Erfindung betrifft ein Verfahren zum Starten eines Betriebssystems auf einer Computer-Hardware mit einer EFI- oder einer UEFI-Firmware gemäß dem Oberbegriff des Patentanspruchs 1, und eine Virtualisierungssteuerung zum Starten eines Betriebssystems auf einer Computer-Hardware mit einer EFI- oder eine UEFI-Firmware gemäß dem Oberbegriff des Patentanspruchs 9.

Moderne Architekturen für Computersysteme, insbesondere für Personal-Computer, haben häufig mehrere Prozessoren bzw. Prozessorkerne und unterstützen damit Virtualisierungs-Technologien. Diese Prozessoren unterstützen dazu den Ablauf von Virtualisierungssteuerungen, die oft auch als "Hypervisor" oder als "Virtual Machine Manager" bezeichnet werden. Ein solcher "Hypervisor" ist ein Software-Layer, also eine Abstraktionsschicht, die es gestattet, mehrere Betriebssysteme ("Gäste") auf einer Hardware-Plattform zu betreiben. Der "Hypervisor" verwaltet dabei die Ressourcen des Systems, wobei die Ressourcen einem oder mehreren "Gästen" oder auch dem "Hypervisor" selbst zugeordnet werden können.

Eine Hauptaufgabe der "Hypervisor" in den genannten Multiprozessorsystemen oder Multikern-Systemen ist die optimale Ausnutzung von Rechenleistung, indem verschiedene Aufgaben (Tasks) den verschiedenen Prozessorkernen zugeordnet werden. Beispielsweise kann ein Echtzeit-Betriebssystem auf einem der Prozessorkerne ablaufen, und ein allgemeines Betriebssystem (GPOS - General-Purpose Operation System) wie Microsoft Windows oder andere können andere Prozessorkerne derselben Architektur verwenden. In diesem Beispiel könnte ein Echtzeit-Betriebssystem (RTOS - Real-Time Operation System) einen industriellen Prozess in Echtzeit steuern, während das allgemeine Betriebssystem das Management und die Visualisierung (Benutzeroberfläche) des gesteuerten Prozesses übernehmen würde.
Häufig werden durch die Virtualisierungssteuerung (Hypervisor) sogenannte virtuelle Maschinen etabliert, in denen die Betriebssysteme "gekapselt" ablaufen, das heisst, dass die virtuelle Maschine jeweils ein in sich geschlossenes System darstellt, in welchem ein Betriebssystem gestartet (Boot) werden kann, ablaufen kann, beendet werden kann, neu gestartet werden kann etc.. Auch ein Versagen ("Absturz") eines Betriebssystems innerhalb einer virtuellen Maschine kann abgefangen werden, ohne dass die anderen Maschinen und die darin ablaufenden Betriebssysteme und Anwendungen beeinträchtigt werden.

Das vollständige Kapseln einer virtuellen Laufzeitumgebung (virtuelle Maschine) hat jedoch auch Nachteile, insbesondere in Bezug auf die Leistungsfähigkeit (Performance), weil jegliche Interaktion des dermaßen gekapselten Betriebssystem mit einer Ressource, also der Computer-Hardware, von der Virtualisierungssteuerung aufgefangen und ausgeführt werden muss (Aussprung in die Virtualisierungssteuerung "VM-Exit"). Aus diesem Grund werden bei den genannten Architekturen insbesondere die allgemeinen Betriebssysteme (GPOS) oft nicht "voll-virtualisiert" in einer voll-virtualisierten virtuellen Maschine ausgeführt, sondern teil-virtualisiert auf der Computer-Hardware, wobei im beschriebenen Fall die Virtualisierungssteuerung im Wesentlichen nur die Zuweisung oder Verteilung der Ressourcen zu dem allgemeinen Betriebssystem (GPOS) und den Echtzeit-Betriebssystemen durchführt. Durch dieses Vorgehen kann als allgemeines Betriebssystem (GPOS) auch ein solches verwendet werden, welches nicht zur Verwendung in einer virtuellen Maschine eingerichtet ist, wobei zusätzlich Performance-Vorteile gegenüber einer voll-virtualisierten Lösung bestehen.

In den genannten Anwendungen kann es erforderlich sein, das allgemeine Betriebssystem wiederholt neu zu starten (Reboot), wobei jedoch ein etwaiges parallel ausgeführtes Echtzeit-Betriebssystem in einer virtuellen Maschine nicht beeinträchtigt oder unterbrochen werden soll.

Ein "Hypervisor" kann also erlauben, dass das allgemeine Betriebssystem (GPOS) neu gestartet wird (Reboot), während eine Applikation zur Prozessteuerung, Automatisierungssteuerung o.ä. eines anderen Betriebssystems derselben Maschine weiterläuft.

Die grundlegenden Funktionen eines Computers werden durch ein fest installiertes Programm initialisiert, welches oft als "Firmware" bezeichnet wird. Die bislang gebräuchlichen "BIOS"-Systeme (Basic Input-Output System) werden heutzutage vermehrt durch EFI- oder UEFI-Systeme (EFI = Extensible Firmware Interface; UEFI = Unified Extensible Firmware Interface) ersetzt. Die in diesen EFI- bzw. UEFI-Firmwares enthaltenen Routinen zum Systemstart eines Betriebssystems, die sogenannten "EFI Boot Services", stehen nach dem Start der Computer-Hardware und dem Abschluss des Starts des Betriebssystems nicht mehr zur Verfügung; nach einem Abschluss des Starts des Betriebssystems werden die entsprechenden Funktionen aus dem Arbeitsspeicher des Computers entfernt und stehen also für einen Neustart ("Re-Boot") des Betriebssystems nicht mehr zur Verfügung, es sei denn, dass die Computer-Hardware komplett neu gestartet wird (Reset). Für die Betriebssysteme, die in virtuellen Maschinen gestartet werden und ablaufen, spielt das nur eine untergeordnete Rolle, denn die virtuelle Maschine bleibt bei einem Neustart der dort installierten Betriebssysteme bestehen und die Virtualisierungssteuerung kann einen beliebig häufigen Neustart der in der virtuellen Maschine installierten Betriebssysteme unterstützen. Dies gilt jedoch nicht für als allgemeine Betriebssystem (GPOS), welches eben nicht voll-virtualisiert in einer virtuellen Maschine abläuft, sondern direkten Zugriff auf die ihm zugeordnete Hardware hat und damit auch die "EFI Boot Services" der Computer-Firmware für jeden Systemstart benötigt. Um dieses nichtvollvirtualisiert ablaufende Betriebssystem neu zu starten, muss der Computer komplett neu gestartet werden (Reset), so dass auch die anderen Betriebssysteme, beispielsweise Echtzeit-Betriebssysteme in den virtuellen Maschinen, gestoppt werden. Dies ist jedoch nicht gewünscht, weil die dort ablaufenden Applikationen dann ebenfalls gestoppt werden.

Zur Lösung des Problems kann natürlich zunächst einmal auf die Nutzung von UEFI- oder EFI-Firmware verzichtet werden. Damit können jedoch die fortschrittlichen Möglichkeiten dieser Systeme auch nicht genutzt werden. Eine weitere Lösungsmöglichkeit besteht darin, das allgemeine Betriebssystem (GPOS) ebenfalls in einer voll-virtualisierten virtuellen Maschine ablaufen zu lassen ("Voll-Virtualisierung"), so dass diese virtuelle Maschine separat neu gestartet werden kann, was jedoch zum Nachteil hat, dass die Performance-Vorteile der direkten Ausführung des Betriebssystems auf der Computer-Hardware entfallen.

Aus der Druckschrift US 2014/0258700 A1- England et al. "Dynamically loaded measured environment for secure code launch" ist es bekannt, den Boot-Vorgang durch das Abfangen von Aufrufen bestimmter Softwaremodule zu unterbrechen, um dabei Sicherheitsfunktionen zu installieren, die die weitere Installation von Software auf der Maschine überwachen.

Es ist also eine Aufgabe der vorliegenden Erfindung, ein wiederholtes Starten eines Betriebssystems auf einer Computer-Hardware mit einer EFI- oder einer UEFI-Firmwareschnittstelle ohne Neustart der Computer-Hardware zu ermöglichen.

Es ist ein Kerngedanke der erfindungsgemäßen Lösung dieses Problems, dass gewährleistet werden soll, dass die "EFI-Boot-Services" auch dann weiterhin zur Verfügung stehen, wenn der erste Start des allgemeinen Betriebssystems (GPOS) bzw. desjenigen Betriebssystems, welches ohne Virtualisierung direkt auf der Computer-Hardware ausgeführt wird, abgeschlossen ist. Die entsprechenden Firmware-Routinen für das Starten von Betriebssystemen werden im Stand der Technik nach dem Abschluss des Boot-Vorgangs durch Aufruf der Funktion "ExitBootServices" aus dem Arbeitsspeicher des Computers entfernt. Unter der Voraussetzung, dass das allgemeine Betriebssystem (GPOS) nicht geändert ("gepatched") wird, kann der Aufruf dieser Funktion "ExitBootServices" jedoch nicht verhindert werden. Erfindungsgemäß soll die Funktion "ExitBootServices" der EFI- oder UEFI-Firmwareschnittstelle durch eine solche Funktion ersetzt werden, die das Löschen der EFI-Boot-Services aus dem Arbeitsspeicher des Computers verhindert, so dass diese Routinen weiterhin zur Verfügung stehen. Dies kann dadurch geschehen, dass der Zeiger zu den Routinen der originalen "ExitBootServices" zu einer alternativen Version dieser "ExitBootServices"-Funktionen umadressiert wird, wobei diese modifizierte Version der "ExitBootServices" derart ausgestaltet ist, dass die "EFI Boot Services"-Routinen der EFI- bzw. UEFI-Firmware nicht abgeschaltet ("disabled") oder gelöscht werden.

Die Aufgabe wird insbesondere durch ein Verfahren gemäß Patentanspruch 1 und eine Virtualisierungssteuerung gemäß Patentanspruch 9 gelöst.

Dabei wird ein Verfahren zum Starten eines Betriebssystems auf einer Computer-Hardware mit einer EFI- oder einer UEFI-Firmwareschnittstelle vorgeschlagen, wobei das Betriebssystem unter Kontrolle einer Virtualisierungssteuerung gestartet wird, wobei nach dem Start der Computer-Hardware EFI- oder UEFI-Laderoutinen in einen Arbeitsspeicher der Computer-Hardware kopiert werden, und wobei das Betriebssystem zum Start eine EFI- oder UEFI-Systemtabelle mit Verweisen zu den EFI- oder UEFI-Laderoutinen aus dem Arbeitsspeicher liest und die EFI- oder UEFI-Laderoutinen aufruft. Dabei wird während des Startens und zur Laufzeit des Betriebssystems eine Deaktivierung der EFI- oder UEFI-Laderoutinen verhindert, insbesondere wird ein Aufruf der ExitBootServices-Funktionen der EFI- oder UEFI-Laderoutinen verhindert. Dadurch stehen die EFI- oder UEFI-Laderoutinen auch für einen wiederholten Start des Betriebssystems zur Verfügung, ohne dass ein Reset der Computer-Hardware initiiert werden muss, um diese Laderoutinen neu in den Arbeitsspeicher zu laden und verfügbar zu machen. Es ergibt sich dadurch der Vorteil, dass andere virtuelle Maschinen und andere Betriebssysteme unterbrechungsfrei weiterarbeiten können, auch wenn das hier betrachtete Betriebssystem wiederholt neu gestartet werden muss.

Dieselben Vorteile lassen sich auch durch eine Virtualisierungssteuerung erzielen, welche das o.g. Verfahren unterstützt.

Vorteilhafte Ausgestaltungen des erfindungsgemäßen Verfahrens sind in den abhängigen Patentansprüchen angegeben; dadurch werden gleichzeitig vorteilhafte Ausgestaltungen der erfindungsgemäßen Virtualisierungssteuerung angegeben. Die dort beschriebenen Merkmale und deren Vorteile können sowohl einzeln, als auch in Kombination miteinander realisiert werden.

In einer vorteilhaften Ausgestaltung wird eine modifizierte Version für die ExitBootServices-Funktion bereitgestellt und bei einem Aufruf der ExitBootServices-Funktion der EFI- oder UEFI-Laderoutinen durch das Betriebssystem wird dann die modifizierte Version ausgeführt. Das Ersetzen des ursprünglichen Version durch die modifierte Version hat den Vorteil, dass nicht das Betriebssystem derart geändert werden muss, dass ein Aufruf der Funktion "ExitBootServices" unterbleibt, sondern das Betriebssystem kann unverändert diese Funktionen aufrufen, diese jedoch sind dann derart modifiziert, dass die Laderoutinen auch nach Abschluss des Boot-Vorgangs verfügbar bleiben..

Der Aufruf der modifizierten Version kann vorteilhaft dadurch bewerkstelligt werden, dass für die ExitBootServices-Funktion ein Zeiger, der auf einen Einsprung in diese ExitBootServices-Funktion der EFI- oder UEFI-Laderoutinen verweist, zu der modifizierten Version der ExitBootServices-Funktionen re-adressiert wird.

Oft schützt jedoch das (U)EFI BIOS die Funktionstabellen und die Funktionen selbst per 'read only'-Setzen des Speichers gegen Manipulation. In einer anderen vorteilhaften Variante der Erfindung erfolgt daher das Ersetzen der ExitBootServices-Funktion durch Nutzung der Virtualisierungstechnik, d.h., dass die Virtualisierungssteuerung vorteilhaft bei einem Aufruf der originalen ExitBootServices-Funktion durch das allgemeine Betriebssystem dies erkennt und die modifizierte Version zur Ausführung bringt. Dies ermöglicht das "Umleiten" des Aufrufs auch in den Fällen, in denen der Zeiger (Pointer) zu der ExitBootFunktion nicht verändert werden kann.

Vorteilhaft wird bei einem Neustart des Betriebssystems ein Reset der Computer-Hardware vermieden, so dass andere Betriebssysteme und Applikationen unterbrechungsfrei weiter arbeiten können.

In einer vorteilhaften Ausgestaltung sollte zumindest ein weiteres Betriebssystem in einer virtuellen Maschine auf der Computer-Hardware ausgeführt werden, wobei die virtuelle Maschine unter Kontrolle der Virtualisierungssteuerung abläuft. Damit wird erreicht, dass direkte Zugriffe dieses weiteren Betriebssystems weitgehend kontrolliert werden können und insbesondere diese weiteren Betriebssysteme nicht unkontrolliert die weiterhin verfügbaren Laderoutinen aufrufen können. Dagegen wird das allgemeine Betriebssystem (GPOS) vorteilhaft direkt auf der Computer-Hardware ausgeführt, was unter anderem Performance-Vorteile bringt und was zur Folge hat, dass auch solche Ressourcen der Computer-Hardware für das allgemeine Betriebssystem verfügbar sind, für deren Verwaltung die Virtualisierungssteuerung nicht oder noch nicht oder nur unzureichend eingerichtet ist.

Ein Ausführungsbeispiel des erfindungsgemäßen Verfahrens und der erfindungsgemäßen Virtualisierungssteuerung wird nachfolgend anhand der Zeichnungen erläutert.

Dabei zeigen:
- Figur 1: in schematischer Darstellung eine Architektur mit einer Computer-Hardware, einer UEFI-Firmware, einem Hypervisor, einem allgemeinen Betriebssystem und einer Anzahl weiterer Betriebssysteme,
- Figur 2: den strukturellen Ablauf eines Boot-Vorgangs auf einer Computer-Hardware mit UEFI- oder EFI-Firmware gemäß dem Stand der Technik,
- Figur 3: den Zugriff auf EFI Boot Services und EFI Runtime Services bei diesem Boot-Vorgang gemäß dem Stand der Technik,
- Figur 4: eine schematische Erläuterung des Standes der Technik, bei dem ein wiederholter Neustart eines allgemeinen Betriebssystems (GPOS) verhindert ist,
- Figur 5: die Zeigerstruktur zwischen einer EFI-Systemtabelle, den EFI-Routinen und den EFI-Funktionen im Arbeitsspeicher gemäß dem Stand der Technik,
- Figur 6: die schematische Erläuterung aus der Figur 3 mit einer Erläuterung der erfindungsgemäßen Änderungen, und
- Figur 7: die Zeigerstruktur aus der Figur 4 mit einer Erläuterung der erfindungsgemäßen Änderungen.

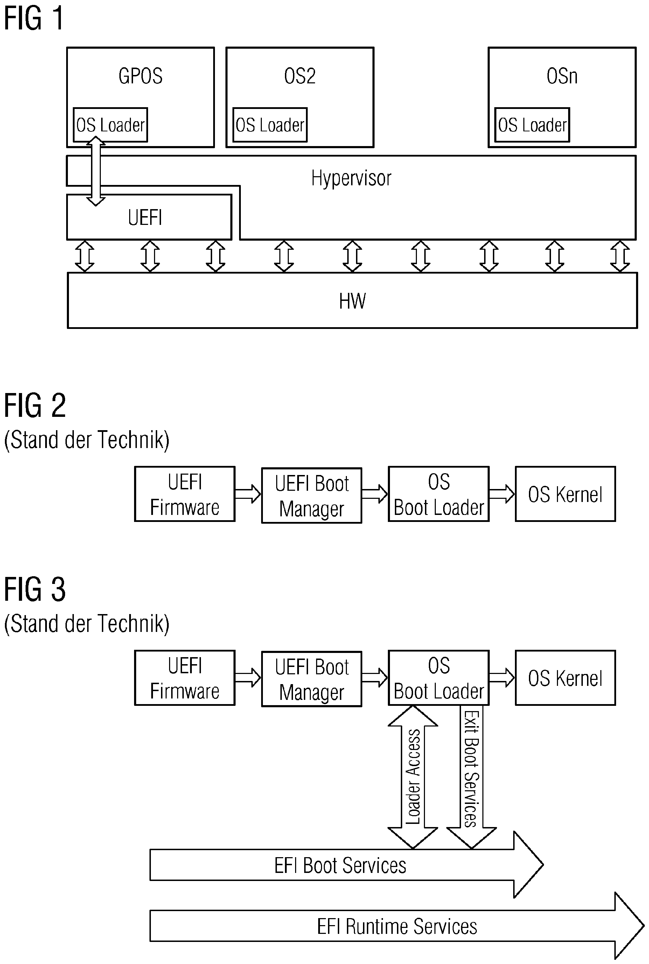

In der Figur 1 ist schematisch eine Architektur mit einer Computer-Hardware HW gezeigt, auf der eine Firmware UEFI verfügbar ist und auf der eine Virtualisierungssteuerung (Hypervisor) zur Verwaltung der Ressourcen der Computer-Hardware HW eingesetzt ist. Die Architektur ist mit mehreren Betriebssystemen GPOS, OS2, ..., OSn versehen, wobei das allgemeine Betriebssystem GPOS direkten Zugriff auf die Computer-Hardware HW und auf die Firmware UEFI hat. Die anderen Betriebssysteme OS2, ..., OSn können in virtuellen Maschinen ablaufen; dies ist für die grundlegende Funktion der Erfindung jedoch unerheblich. Jedes der Betriebssysteme GPOS, OS2, ..., OSn verfügt über ein eigenes Ladeprogramm OS Loader für den jeweiligen Boot-Vorgang. Die Firmware UEFI bzw. das Interface dieser Firmware ist für die Initialisierung der Computer-Hardware HW und für das Starten der Virtualisierungssteuerung (Hypervisor) verantwortlich.

Abweichend zu der hier beschriebenen Struktur kann auch das allgemeine Betriebssystem GPOS in einer virtuellen Maschine ablaufen, wobei für das hier geschilderte Problem wichtig ist, dass zum Starten (Boot) dieses Betriebssystems GPOS eine Verwendung der UEFI-Firmwareroutinen (EFI Boot Services) notwendig ist, diese also nicht durch die virtuelle Maschine nachgebildet werden.

Die Figur 2 zeigt schematisch die vier Hauptphasen eines Boot-Vorgangs mit UEFI-Firmware. Dabei wird zum Systemstart in die UEFI-Firmware eingesprungen, die dafür sorgt, dass der UEFI Boot Manager aufgerufen wird, der entscheidet, welches Betriebssystem gestartet werden soll, und der den entsprechenden "BootLoader" (OS Loader) des ausgewählten Betriebssystems aufruft. Dieser "BootLoader" initiiert und überwacht den Start des jeweiligen Betriebssystems, wobei nach dessen Beendigung die Kontrolle an den Kern (OS Kernel) des dann vollständig gestarteten Betriebssystems übergeben wird. Dies entspricht dem Stand der Technik.

Die Figur 3 ist eine Detaillierung der Figur 2 und beschreibt ebenfalls den Stand der Technik. Dabei wird dargestellt, dass das Ladeprogramm OS BootLoader des zu startenden Betriebssystems für den Startvorgang auf die Laderoutinen des UEFI- bzw. EFI-Firmwareprogramms zugreift; dies ist am Doppelpfeil "Loader Access" dargestellt. Am Ende des Startvorgangs wird die Funktion "ExitBootServices" der EFI- bzw. UEFI-Boot Services (EFI- bzw. UEFI-Laderoutinen) aufgerufen, wonach die Laderoutinen des EFI- bzw. UEFI-Boot Services deaktiviert und/oder aus dem Arbeitsspeicher des Computers entfernt werden. Danach stehen seitens der UEFI-Firmware nur noch die UEFI- bzw. EFI- Runtime Services zur Verfügung, wobei diese die Zugriffe des Betriebssystems auf Ressourcen der Computer-Hardware HW während des laufenden Betriebs unterstützen und daher dauerhaft zur Verfügung stehen sollen.

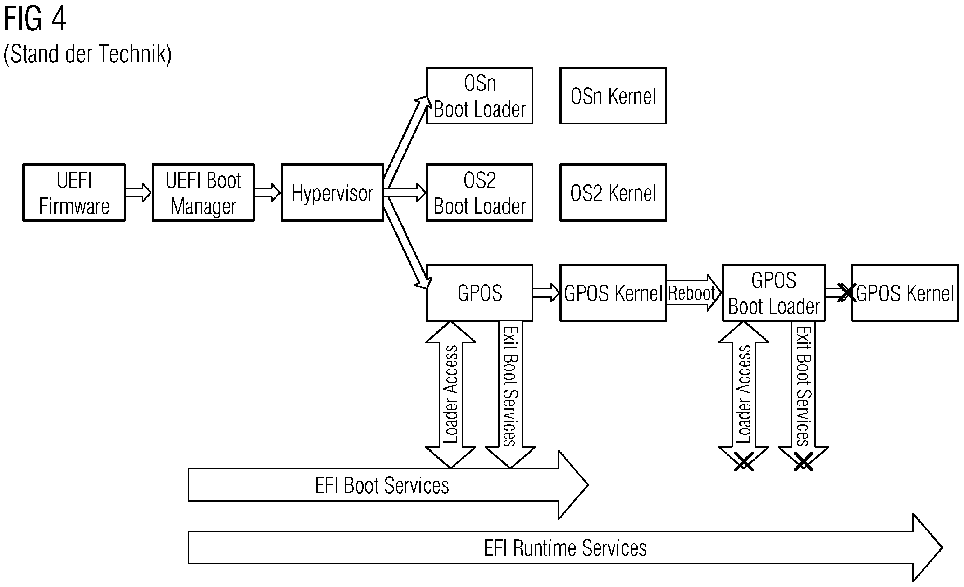

Anhand der Figur 4, die ebenfalls dem Stand der Technik entspricht, soll nun das der Erfindung zugrundeliegende Problem diskutiert werden. Nach dem Aufruf der Funktion "ExitBootService" am Ende des Ladevorgangs des allgemeinen Betriebssystems GPOS stehen die Laderoutinen "EFI BootServices" nicht mehr zur Verfügung. Um diese wieder zu aktivieren, müsste die Computer-Hardware HW komplett neu gestartet werden ("Reset"). Dies würde jedoch die anderen Betriebssysteme (OS2 Kernel, OSn Kernel) unterbrechen, was nicht gewünscht ist. In der Figur 4 ist dargestellt, dass durch die Nicht-Verfügbarkeit der Routinen "Loader Access" und "ExitBootServices" in der Phase "Reboot" ein Start des Betriebssystems, insbesondere des Betriebssystem-Kerns (GPOS Kernel), nicht mehr möglich ist. Dabei soll angemerkt werden, dass der Neustart (Reboot) des allgemeinen Betriebssystems GPOS durch die Virtualisierungssteuerung (Hypervisor) erfolgt, und nicht durch den "UEFI Boot Manager" initiiert werden kann.

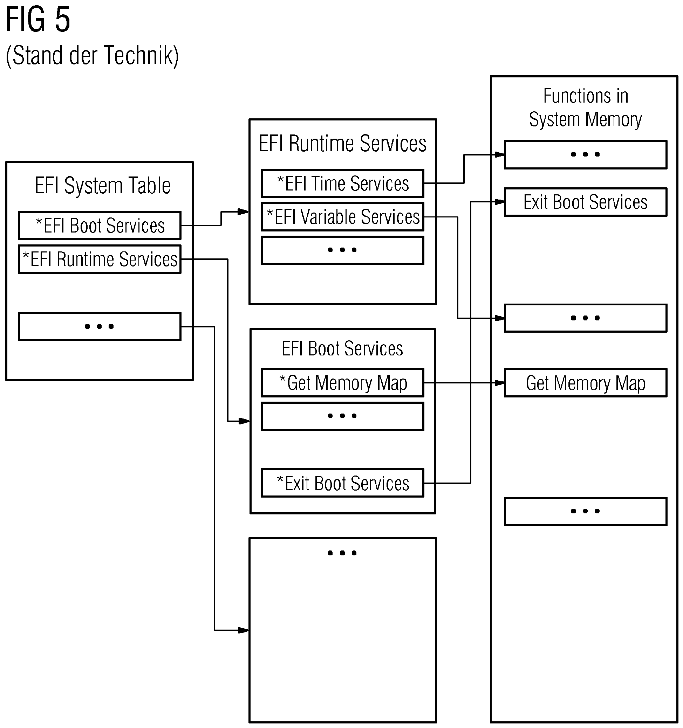

Die Figur 5 zeigt eine Systemtabelle der am Systemstart (Boot) beteiligten Firmware-Komponenten. Der ausführbare Code der Firmware ist dabei zum Systemstart in den Arbeitsspeicher kopiert worden; in der Figur 5 ist das in der rechten Säule dargestellt. Im linken und im mittleren Teil der Figur sind die Zeiger (Pointer) dargestellt, die dafür sorgen, dass die entsprechenden Routinen im Arbeitsspeicher adressiert und eingesprungen werden können. Zeiger sind in der Darstellung jeweils mit einem Stern ("*") gekennzeichnet. In der Figur ist insbesondere zu sehen, dass der Zeiger "*ExitBootServices" auf die entsprechende Funktion "ExitBootServices" im Arbeitsspeicher ("Functions in System Memory") verweist.

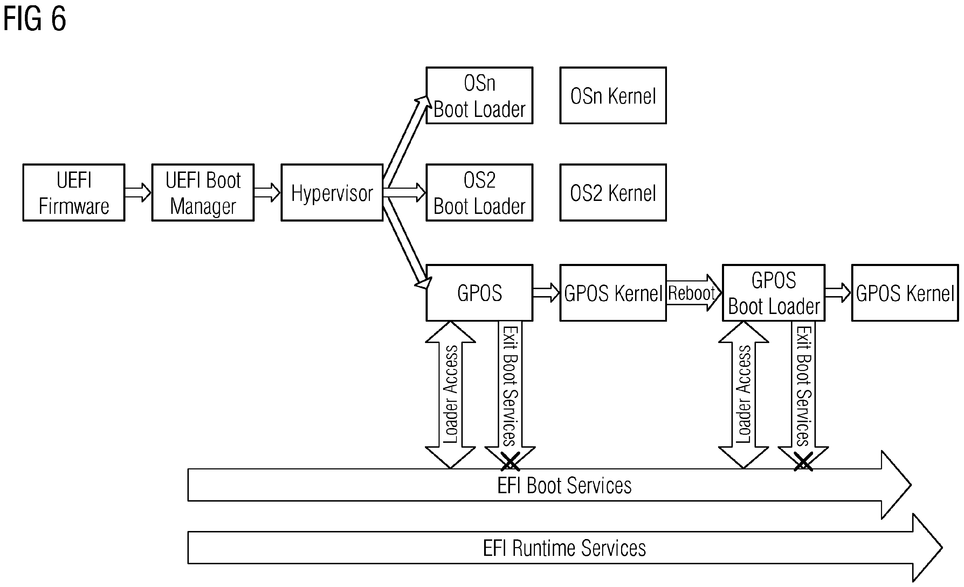

In der Figur 6 ist ein Kernstück der erfindungsgemäßen Lösung der Aufgabe skizziert. Dabei wird deutlich gemacht, dass der "GPOS BootLoader" des allgemeinen Betriebssystems GPOS daran gehindert wird, die Funktion "ExitBootService" aufzurufen.

Dies hat zur Folge, dass die "EFI Boot Services" während der gesamten Laufzeit der Computer-Hardware weiterhin zur Verfügung stehen, so dass ein erneutes Starten "Reboot" des Betriebssystems GPOS möglich ist.

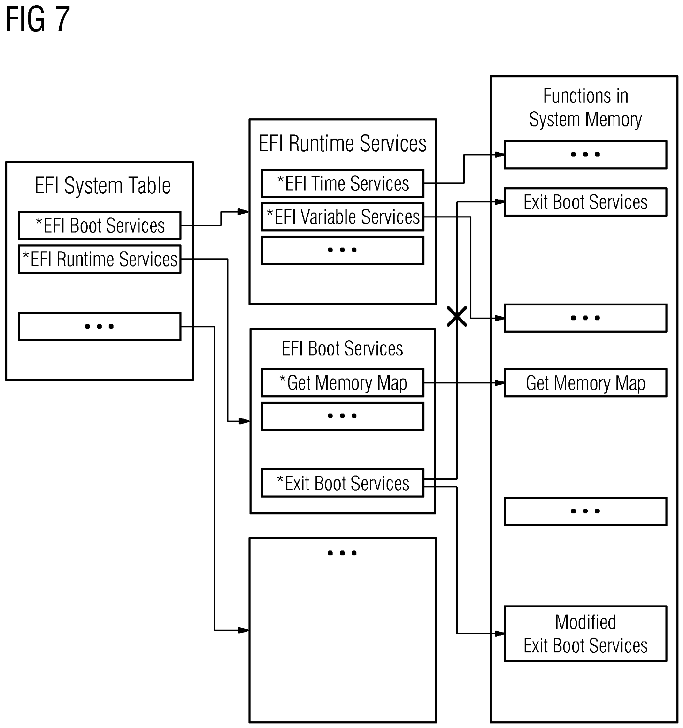

In der Figur 7 ist eine Möglichkeit dargestellt, wie der Aufruf der "ExitBootServices" der Firmware verhindert bzw. modifiziert werden kann. Dabei soll angemerkt werden, dass nicht alle Funktionen der EFI- bzw. UEFI-Boot Services unterdrückt werden sollen, sondern nur solche, die eine weitere Verwendung der EFI-Laderoutinen verhindern, beispielsweise solche Funktionen, die ein Entfernen der entsprechenden Firmware-Routinen aus dem Arbeitsspeicher (System Memory) bewerkstelligen. Dazu wird eine modifizierte Version der Laderoutinen, die sogenannten "Modified ExitBootServices" bereitgestellt und in den Arbeitsspeicher geladen. Der Zeiger "*ExitBootServices" in der Systemtabelle, der bislang auf die originale Version der "ExitBootServices" der EFI-Firmware verwiesen hat, wird neu adressiert, so dass dieser nun auf die modifizierte Version der Laderoutinen verweist. Dies führt dazu, dass das allgemeine Betriebssystem GPOS unverändert weiterarbeiten kann, insbesondere nicht verändert oder "gepatcht" werden muss; es verwendet lediglich einen veränderten Zeiger zum Einsprung in die modifizierten Laderoutinen. Dies geschieht vorzugsweise durch Manipulation des Ablaufs durch den Hypervisor. In der eigentlichen Speicherzelle steht nach wie vor der originale Zeiger, da er ggf. aufgrund der Speichereinstellung als "read only" gar nicht modifiziert werden kann. Jedoch wird der Versuch des Einsprungs in die originale Version der "ExitBoot"-Funktion durch den Hypervisor erkannt und entsprechend auf die modifizierte Version "umgeleitet".

Auf diese Weise kann das allgemeine Betriebssystem GPOS beliebig oft neu gestartet werden, ohne die anderen Betriebssysteme zu beeinträchtigen. Diese Erfindung funktioniert im Übrigen auch dann, wenn die anderen Betriebssysteme OS2, ..., OSn die EFI-Laderoutinen verwenden und beispielsweise nicht von einer Virtualisierung der Hardware Gebrauch machen sollen.

## Patentansprüche

1. Verfahren zum wiederholten Starten eines Betriebssystems (GPOS) auf einer Computer-Hardware (HW) mit einer EFI- oder einer UEFI-Firmwareschnittstelle (EFI = Extensible Firmware Interface; UEFI = Unified Extensible Firmware Interface),
wobei das Betriebssystem unter Kontrolle einer Virtualisierungssteuerung (Hypervisor) gestartet wird, wobei nach dem Start der Computer-Hardware EFI- oder UEFI-Laderoutinen in einen Arbeitsspeicher der Computer-Hardware kopiert werden, und
wobei das Betriebssystem (GPOS) zum Start eine EFI- oder UEFI-Systemtabelle mit Verweisen zu den EFI- oder UEFI-Laderoutinen aus dem Arbeitsspeicher liest und die EFI- oder UEFI-Laderoutinen aufruft,
wobei durch das Betriebssystem während oder nach dessen Start ExitBootServices der EFI- oder UEFI-Laderoutinen aufgerufen werden,
**dadurch gekennzeichnet,**
**dass** während des Startens und zur Laufzeit des Betriebssystems (GPOS) eine Deaktivierung der EFI- oder UEFI-Laderoutinen verhindert wird, indem
eine modifizierte Version für die ExitBootServices-Funktion bereitgestellt wird und bei einem Aufruf der ExitBootServices-Funktion der EFI- oder UEFI-Laderoutinen durch das Betriebssystem (GPOS) die modifizierte Version ausgeführt wird.

2. Verfahren nach Patentanspruch 1, **dadurch gekennzeichnet,**
**dass** die modifizierte Version der ExitBootServices-Funktion derart ausgestaltet ist, dass nach Abschluss des Starts des Betriebssystems (GPOS) die EFI- oder UEFI-Laderoutinen im Arbeitsspeicher verbleiben und für einen erneuten Start des Betriebssystems (GPOS) verfügbar bleiben.

3. Verfahren nach einem der Patentansprüche 1 oder 2, **dadurch gekennzeichnet,**
**dass** zum Aufruf der modifizierte Version für die ExitBootServices-Funktion ein Zeiger, der auf einen Einsprung in die ExitBootServices-Funktion der EFI- oder UEFI-Laderoutinen verweist, zu der modifizierte Version der ExitBootServices-Funktion re-adressiert wird.

4. Verfahren nach einem der Patentansprüche 1 oder 2, **dadurch gekennzeichnet,**
**dass** ein Aufruf der ExitBootServices-Funktion durch das Betriebssystems (GPOS) durch die Virtualisierungssteuerung überwacht und erkannt wird, wobei im Falles des Aufrufes durch die Virtualisierungssteuerung die Ausführung der ursprünglichen Version der ExitBootServices-Funktion verhindert und ein Aufruf der modifizierten Version der ExitBootServices-Funktion initiiert wird.

5. Verfahren nach einem der vorhergehenden Patentansprüche, **dadurch gekennzeichnet,**
**dass** bei einem Neustart des Betriebssystems (GPOS) ein Reset der Computer-Hardware (HW) vermieden wird.

6. Verfahren nach einem der vorhergehenden Patentansprüche, **dadurch gekennzeichnet,**
**dass** zumindest ein weiteres Betriebssystem (OS2, ..., OSn) in einer virtuellen Maschine auf der Computer-Hardware (HW) ausgeführt wird, wobei die virtuelle Maschine unter Kontrolle der Virtualisierungssteuerung (Hypervisor) abläuft.

7. Verfahren nach einem der vorhergehenden Patentansprüche, **dadurch gekennzeichnet,**
**dass** das Betriebssystem (GPOS) direkt auf der Computer-Hardware (HW) ausgeführt wird.

8. Virtualisierungssteuerung zum wiederholten Starten eines Betriebssystems (GPOS) auf einer Computer-Hardware (HW) mit einer EFI- oder einer UEFI-Firmwareschnittstelle (EFI = Extensible Firmware Interface; UEFI = Unified Extensible Firmware Interface),
wobei vorgesehen ist, dass das Betriebssystem unter Kontrolle der Virtualisierungssteuerung (Hypervisor) gestartet wird,
wobei vorgesehen ist, dass nach dem Start der Computer-Hardware EFI- oder UEFI-Laderoutinen in einen Arbeitsspeicher der Computer-Hardware kopiert werden, und wobei vorgesehen ist, dass das Betriebssystem (GPOS) zum Start eine EFI- oder UEFI-Systemtabelle mit Verweisen zu den EFI- oder UEFI-Laderoutinen aus dem Arbeitsspeicher liest und die EFI- oder UEFI-Laderoutinen aufruft, **dadurch gekennzeichnet,**
**dass** vorgesehen ist, dass während des Startens und zur Laufzeit des Betriebssystems (GPOS) durch die Virtualisierungssteuerung eine Deaktivierung der EFI- oder UEFI-Laderoutinen verhindert wird, indem eine modifizierte Version für die ExitBootServices-Funktion bereitgestellt ist und vorgesehen ist, dass bei einem Aufruf der ExitBootServices-Funktion der EFI- oder UEFI-Laderoutinen durch das Betriebssystem (GPOS) die modifizierte Version ausgeführt wird.

9. Virtualisierungssteuerung nach Patentanspruch 8, **dadurch gekennzeichnet,**
**dass** ein Zeiger zu den Routinen der originalen "ExitBootServices" zu der modifizierten Version dieser "ExitBootServices"-Funktionen umadressiert ist.

## Claims

1. Method for repeatedly starting an operating system (GPOS) on computer hardware (HW) having an EFI (Extensible Firmware Interface) or a UEFI (Unified Extensible Firmware Interface),
wherein the operating system is started under the control of a virtualization controller (hypervisor),
wherein, after the computer hardware has been started, EFI or UEFI loading routines are copied to a main memory of the computer hardware, and
wherein the operating system (GPOS), for starting, reads an EFI or UEFI system table with references to the EFI or UEFI loading routines from the main memory and calls the EFI or UEFI loading routines,
wherein ExitBootServices of the EFI or UEFI loading routines are called by the operating system while it is being started or after it has been started,
**characterized**
**in that** deactivation of the EFI or UEFI loading routines is prevented while starting the operating system and at the runtime of the operating system (GPOS) by
providing a modified version for the ExitBootServices function and executing the modified version when the ExitBootServices function of the EFI or UEFI loading routines is called by the operating system (GPOS).

2. Method according to Patent Claim 1,
**characterized**
**in that** the modified version of the ExitBootServices function is configured in such a manner that the EFI or UEFI loading routines remain in the main memory after the starting of the operating system (GPOS) has been completed and remain available for a restart of the operating system (GPOS).

3. Method according to either of Patent Claims 1 and 2,
**characterized**
**in that**, in order to call the modified version for the ExitBootServices function, a pointer which refers to an entry to the ExitBootServices function of the EFI or UEFI loading routines is re-addressed to the modified version of the ExitBootServices function.

4. Method according to either of Patent Claims 1 and 2,
**characterized**
**in that** calling of the ExitBootServices function by the operating system (GPOS) is monitored and detected by the virtualization controller, wherein, if called by the virtualization controller, the execution of the original version of the ExitBootServices function is prevented and calling of the modified version of the ExitBootServices function is initiated.

5. Method according to one of the preceding patent claims,
**characterized**
**in that** resetting of the computer hardware (HW) is avoided if the operating system (GPOS) is restarted.

6. Method according to one of the preceding patent claims,
**characterized**
**in that** at least one further operating system (OS2, ..., OSn) is executed in a virtual machine on the computer hardware (HW), wherein the virtual machine runs under the control of the virtualization controller (hypervisor).

7. Method according to one of the preceding patent claims,
**characterized**
**in that** the operating system (GPOS) is directly executed on the computer hardware (HW).

8. Virtualization controller for repeatedly starting an operating system (GPOS) on computer hardware (HW) having an EFI (Extensible Firmware Interface) or a UEFI (Unified Extensible Firmware Interface),
wherein provision is made for the operating system to be started under the control of the virtualization controller (hypervisor),
wherein, after the computer hardware has been started, provision is made for EFI or UEFI loading routines to be copied to a main memory of the computer hardware, and wherein provision is made for the operating system (GPOS), for starting, to read an EFI or UEFI system table with references to the EFI or UEFI loading routines from the main memory and to call the EFI or UEFI loading routines,
**characterized**
**in that** provision is made for deactivation of the EFI or UEFI loading routines to be prevented by the virtualization controller while starting the operating system and at the runtime of the operating system (GPOS) by
providing a modified version for the ExitBootServices function and provision being made for the modified version to be executed when the ExitBootServices function of the EFI or UEFI loading routines is called by the operating system (GPOS).

9. Virtualization controller according to Patent Claim 8,
**characterized**
**in that** a pointer to the routines of the original "ExitBootServices" is readdressed to the modified version of these "ExitBootServices" functions.

## Revendications

1. Procédé de lancement répété d'un système (GPOS) d'exploitation sur un matériel (HW) informatique ayant une interface de microprogrammation EFI ou UEFI (EFI = Extensible Firmware Interface; UEFI = Unified Extensible Firmware Interface),
dans lequel on lance le système d'exploitation sous le contrôle d'une commande de virtualisation (hypervisor), dans lequel, après le lancement du matériel informatique, on copie des routines de charge EFI ou UEFI dans une mémoire de travail du matériel informatique et
dans lequel le système (GPOS) d'exploitation lit, pour le lancement dans la mémoire de travail, une table de système EFI ou UEFI avec renvoi aux routines de charge EFI ou UEFI et appelle les routines EFI ou UEFI,
dans lequel on appelle, par le système d'exploitation, pendant ou après son lancement, des exit boot services des routines de charge EFI ou UEFI,
**caractérisé**
**en ce que**, pendant le lancement et pour le temps de marche du système (GPOS) d'exploitation, on empêche une désactivation des routines de charge EFI ou UEFI en mettant à disposition une version modifiée de la fonction exit boot services et, si la fonction exit boot services des routines de charge EFI ou UEFI est appelée par le système (GPOS) d'exploitation, on exécute la version modifiée.

2. Procédé suivant la revendication 1,
**caractérisé**
**en ce que** la version modifiée de la fonction exit boot services est conformée de manière à ce qu'après la fin du lancement du système (GPOS) d'exploitation, les routines de charge EFI ou UEFI restent dans la mémoire de travail et restent disponibles pour un lancement renouvelé du système (GPOS) d'exploitation.

3. Procédé suivant l'une des revendications 1 ou 2,
**caractérisé**
**en ce que** pour appeler la version modifiée de la fonction exit boot services, on réadresse, en la version modifiée de la fonction exit boot services, un pointeau, qui renvoie à une entrée dans la fonction exit boot services des routines de charge EFI ou UEFI.

4. Procédé suivant l'une des revendications 1 ou 2,
**caractérisé**
**en ce que** l'on contrôle et l'on détecte, par la commande de virtualisation, un appel de la fonction exit boot services par le système (GPOS) d'exploitation,
dans lequel, dans le cas de l'appel, on empêche, par la commande de virtualisation, l'exécution de la version originale de la fonction exit boot services et on initie un appel de la version modifiée de la fonction exit boot services.

5. Procédé suivant l'une des revendications précédentes,
**caractérisé**
**en ce que**, lors d'un lancement renouvelé du système (GPOS) d'exploitation, on empêche une remise à l'état initial du matériel (HW) informatique.

6. Procédé suivant l'une des revendications précédentes,
**caractérisé**
**en ce que** l'on exécute au moins un autre système (OS2, ..., OSn) d'exploitation dans une machine virtuelle sur le matériel (HW) informatique, la machine virtuelle fonctionnant sous le contrôle de la commande de virtualisation (hypervisor).

7. Procédé suivant l'une des revendications précédentes,
**caractérisé**
**en ce que** l'on exécute le système (GPOS) d'exploitation directement sur le matériel (HW) informatique.

8. Commande de virtualisation pour lancer de manière répétée un système (GPOS) d'exploitation sur un matériel (HW) informatique ayant une interface de microprogrammation EFI ou UEFI (EFI = Extensible Firmware Interface; UEFI = Unified Extensible Firmware Interface),
dans lequel il est prévu de lancer le système d'exploitation sous le contrôle de la commande de virtualisation (hypervisor),
dans lequel il est prévu qu'après le lancement du matériel informatique, on copie des routines de charge EFI ou UEFI dans une mémoire de travail du matériel informatique et dans lequel il est prévu que le système (GPOS) d'exploitation lise, pour le lancement dans la mémoire de travail, une table de système EFI ou UEFI avec renvoi aux routines de charge EFI ou UEFI et appelle les routines de charge EFI ou UEFI,
**caractérisé**
**en ce qu'**il est prévu que, pendant le lancement et pour le temps de marche du système (GPOS) d'exploitation, une désactivation des routines de charge EFI ou UEFI soit empêchée par la commande de virtualisation, par le fait qu'une version modifiée de la fonction exit boot services et mise à disposition et prévue, de manière à ce que, lors de l'appel de la fonction exit boot services des routines de charge EFI ou UEFI, la version modifiée soit réalisée par le système (GPOS) d'exploitation.

9. Commande de virtualisation suivant la revendication 8,
**caractérisée**
**en ce qu'**un pointeau vers les routines des "exit boot services" d'origine réadresse vers la version modifiée de ces fonctions "exit boot services".
